# EUROPÄISCHE PATENTSCHRIFT

(11) **EP 1 305 970 B1**
(45) Veröffentlichungstag und Bekanntmachung des Hinweises auf die Patenterteilung: **30.11.2005**
(21) Anmeldenummer: 01956388.1
(22) Anmeldetag: 26.07.2001
(51) Int. Cl.: H04Q 7/38

(54) **POSITIONSABHÄNGIGE STEUERUNG VON LEISTUNGSMERKMALEN EINES KOMMUNIKATIONSSYSTEMS**
POSITION-DEPENDENT CONTROL OF FEATURES OF A COMMUNICATIONS SYSTEM
COMMANDE DE CARACTERISTIQUES DE SERVICE D'UN SYSTEME DE COMMUNICATION EN FONCTION D'UNE POSITION

(30) Priorität: 04.08.2000 DE 10038259
(43) Veröffentlichungstag der Anmeldung: 02.05.2003
(73) Patentinhaber: SIEMENS AKTIENGESELLSCHAFT, 80333 München (DE)
(72) Erfinder: BLITZ, Andre, 81827 München (DE)
(86) Internationale Anmeldenummer: PCT/DE2001/002842
(87) Internationale Veröffentlichungsnummer: WO 2002/013562

(56) Entgegenhaltungen:
- WO-A-94/29995
- WO-A-99/41927
- US-A- 5 555 376
- US-A- 5 946 611

## Beschreibung

Zeitgemäße Kommunikationssysteme, z.B. zur Sprach-, Video- und/oder Datenkommunikation, verfügen häufig über eine Vielzahl von Leistungsmerkmalen, wie beispielsweise Anrufumleitung, Rufweiterschaltung und Konferenzschaltung. Zum Einrichten oder Aktivieren derartiger Leistungsmerkmale sind allerdings häufig zeitraubende und komplizierte Benutzereingaben erforderlich. Dies sei im folgenden am Beispiel des Einrichtens einer Anrufumleitung veranschaulicht.

Eine Anrufumleitung wird häufig dazu verwendet, Anrufe, die an ein am Arbeitsplatz eines Benutzers befindliches Endgerät gerichtet sind, auf ein anderes Endgerät umzuleiten, wenn der Benutzer seinen Arbeitsplatz verläßt. Der Benutzer muß zu diesem Zweck bei jedem Verlassen des Arbeitsplatzes eine entsprechende Anrufumleitung in einer Leistungsmerkmalsteuerung des Kommunikationssystems aktivieren. Als Umleitungsziel kann der Benutzer dabei z.B. ein von ihm mitgeführtes mobiles oder schnurloses Endgerät, eine Sprachbox oder ein Endgerät eines Arbeitskollegen bestimmen. Bei aktivierter Anrufumleitung signalisiert das Kommunikationssystem dann die für das Endgerät am Arbeitsplatz eintreffenden Anrufe an dem als Umleitungsziel bestimmten Endgerät. Bei der Rückkehr des Benutzers an seinen Arbeitsplatz muß der Benutzer die Anrufumleitung wieder explizit deaktivieren, so daß eintreffende Anrufe wieder zum Endgerät des Arbeitsplatzes vermittelt werden. Die zum Aktivieren bzw. Deaktivieren einer Anrufumleitung bei jedem Verlassen bzw. bei jeder Rückkehr an den Arbeitsplatz vorzunehmenden Benutzereingaben sind sehr zeitraubend. Außerdem besteht die Gefahr, daß der Benutzer z.B. beim Verlassen seines Arbeitsplatzes vergißt die Anrufumleitung zu aktivieren und infolgedessen für eintreffende Anrufe zeitweilig nicht erreichbar ist.

Auch andere Leistungsmerkmale eines Kommunikationssystems erfordern insbesondere bei einem Ortswechsel des Benutzers ähnlich umständliche Benutzereingaben.

Das Dokument US 549 66 11 offenbart ein Verfahren zur Anrufumleitung zur aktuellen Funkzelle eines mobilen Endgerätes basierend auf dessen jeweiliger Position.

Es ist Aufgabe der vorliegenden Erfindung ein Verfahren anzugeben, das ein automatisches und bedarfsgerechtes Steuern von Anrufumleitungen eines Kommunikationssystems erlaubt. Es ist weiterhin Aufgabe der vorliegenden Erfindung ein mobiles Endgerät und eine Basisstation zur Realisierung des erfindungsgemäßen Verfahrens anzugeben.

Gelöst wird diese Aufgabe durch ein Verfahren mit den Merkmalen des Patentanspruchs 1, durch ein mobiles Endgerät mit den Merkmalen des Patentanspruchs 9 und durch eine Basisstation mit den Merkmalen des Patentanspruchs 10.

Die Erfindung erlaubt ein automatisches Steuern z.B. einer Anrufumleitung eines Kommunikationssystems in Abhängigkeit von einer Position eines mobilen Endgerätes. Das mobile Endgerät kann dabei gewissermaßen als Indikator dafür angesehen werden, wo sich ein das mobile Endgerät bei sich tragender Benutzer aufhält. Die Position des mobilen Endgerätes wird mittels eines Satellitennavigationsempfängers des mobilen Endgerätes ermittelt und mit einer gespeicherten Referenzposition verglichen. Anschließend wird abhängig vom Vergleichsergebnis die Anrufumleitungen des Kommunikationssystems gesteuert.

Unter einem mobilen Endgerät sei im folgenden auch ein sogenanntes schnurloses Endgerät verstanden. Die Erfindung ist im wesentlichen unabhängig von dem vom mobilen Endgerät und dessen Basisstation verwendeten drahtlosen Kommunikationsverfahren. Beispielsweise kann ein mobiles Endgerät gemäß dem sogenannten Bluetooth-, DECT- oder GSM-Standard verwendet werden.

Das Steuern der Anrufumleitung kann z.B. ein Einrichten, Konfigurieren, Aktivieren oder Deaktivieren umfassen. So kann beispielsweise die Anrufumleitung die ein Festnetzendgerät am Schreibtisch des Benutzers betrifft, dann aktiviert werden, wenn der Benutzer mit seinem mobilen Endgerät einen vorgegebenen Bereich um seinen Schreibtisch verläßt. Dieser Bereich ist dazu vorher als Referenzposition abzuspeichern.

Vorteilhafte Ausführungsformen und Weiterbildungen der Erfindung sind in den abhängigen Ansprüchen angegeben.

Der Vergleich der ermittelten Position mit der gespeicherten Referenzposition sowie die Steuerung des Leistungsmerkmals kann vom mobilen Endgerät oder alternativ von einer Basisstation des mobilen Endgerätes ausgeführt werden. Bei der letztgenannten Alternative ist vorher die per Satellitennavigationempfänger ermittelte Position des mobilen Endgerätes von diesem zur Basisstation zu übermitteln. Die Ausführung des Vergleichs und der Steuerung des Leistungsmerkmals durch das mobile Endgerät hat den Vorteil, daß zur Realisierung der Erfindung keine Eingriffe an der Basisstation erforderlich sind. Die alternative Ausführung des Vergleichs und der Steuerung des Leistungsmerkmals durch die Basisstation hat dagegen den Vorteil, daß die Erfindung mit jedem mit einem Satellitennavigationsempfänger ausgerüsteten mobilen Endgerät, dessen Position durch die Basisstation abfragbar ist, realisiert werden kann.

In besonders vorteilhafter Weise läßt sich die Erfindung zum positonsabhängigen Steuern einer Anrufumleitung einsetzen. So kann beispielsweise eine Anrufumleitung für ein Festnetzendgerät am Schreibtisch des Benutzers dann aktiviert werden, wenn der Benutzer mit seinem mobilen Endgerät einen vorgegebenen Bereich um seinen Schreibtisch verläßt. Die zu aktivierende Anrufumleitung kann zu einem beliebigen zweiten Endge-rät führen, wie z.B. zum mobilen Endgerät selbst, zu einer Sprachbox, zu einem Endgerät eines Arbeitskollegen, zu einem Heimatanschluß des Benutzers oder zu einem weiteren mobilen Endgerät des Benutzers. Beim letztgenannten Beispiel kann eine erfindungsgemäß gesteuerte Anrufumleitung dazu verwendet werden, ein sogenanntes Roaming zu einem anderen mobilen Endgerät zu realisieren, das auch einem anderen Funknetz als das als Positionsindikator verwendete mobile Endgerät angehören kann.

Der Vergleich der ermittelten Position des mobilen Endgerätes mit der Referenzposition kann auf besonders einfache Weise durchgeführt werden, indem die Entfernung zwischen der Position des mobilen Endgerätes und der Referenzposition ermittelt wird. Weiterhin kann ein Werterahmen für die ermittelte Entfernung vorgegeben sein, bei dessen Überschreiten die Steuerung des Leistungsmerkmals veranlaßt wird. Als Werterahmen kann hierbei z.B. diejenige Entfernung vorgegeben werden, in der ein Benutzer ein Klingeln seines Schreibtischtelefons noch akustisch wahrnehmen kann. Bei Überschreiten dieser Entfernung kann dann automatisch eine Anrufumleitung vom Schreibtischtelefon zum mobilen Endgerät aktiviert werden. Darüber hinaus können weitere Werterahmen für die Entfernung zwischen ermittelter Position und Referenzposition vorgegeben werden, um Leistungsmerkmale bedarfsweise zu steuern, wenn ein Benutzer mit seinem mobilem Endgerät z.B. sein Firmengelände, eine Stadt oder ein Land verläßt oder betritt.

Ein Ausführungsbeispiel der Erfindung wird nachfolgend anhand der Zeichnung näher erläutert.

Dabei zeigen jeweils in schematischer Darstellung:
Figur 1 ein mobiles Endgerät zum positionsabhängigen Steuern einer Anrufumleitung,
Figur 2 ein das mobile Endgerät und eine Vermittlungseinrichtung umfassendes Kommunikationssystem mit einer eingerichteten aber nicht aktivierten Anrufumleitung und
Figur 3 dasselbe Kommunikationssystem mit aktivierter Anrufumleitung.

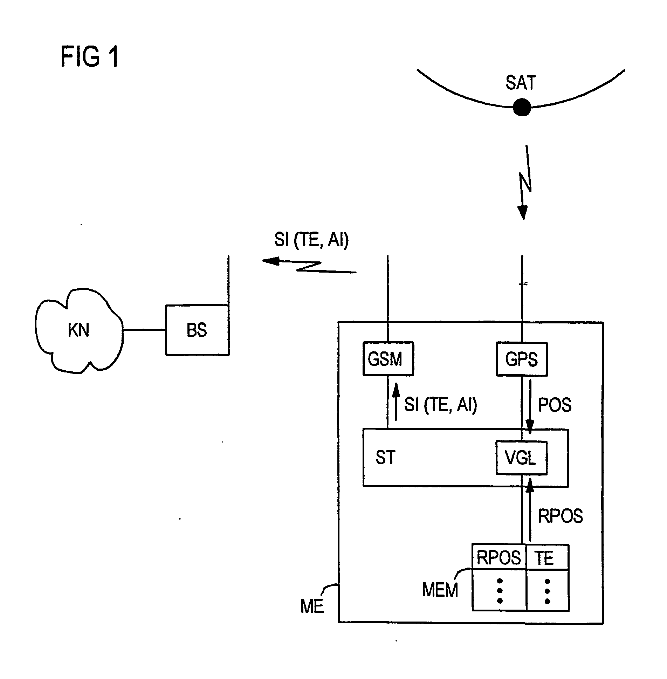

In Figur 1 ist ein erfindungsgemäßes mobiles Endgerät ME schematisch dargestellt, das drahtlos über eine Basisstation BS an ein öffentliches oder privates Kommunikationsnetz KN angekoppelt ist. Das mobile Endgerät ME weist als Funktionskomponenten ein GSM-Sende/Empfangsmodul GSM (Global System for Mobile communication), einen GPS-Empfänger GPS (Global Positioning System), eine zentrale Steuerung ST sowie einen Speicher MEM auf. Die zentrale Steuerung enthält ihrerseits eine Vergleichseinrichtung VGL, die vorzugsweise mittels einer auf einem Systemprozessor der zentralen Steuerung ST ablaufenden Vergeichsroutine implementiert ist. Das GSM-Sende/Empfangsmodul GSM, der GPS-Empfänger GPS und der Speicher MEM sind mit der zentralen Steuerung ST verbunden. Mittels des GSM-Sende/Empfangsmoduls GSM wird eine GSM-Luftschnittstelle zur Basisstation BS realisiert. Alternativ dazu könnte das mobile Endgerät ME auch über eine UMTS-(Universal Mobile Telecommunication Service), DECT- (Digital Enhanced Cordless Telephony) oder eine Bluetooth-Luftschnittstelle mittels eines entsprechenden UMTS-, DECT- bzw. Bluetooth-Sende/Empfangsmoduls an die Basisstation BS gekoppelt sein.

Der GPS-Empfänger GPS dient zum Empfangen und Auswerten von Navigationssignalen, die von in Erdumlaufbahn befindlichen Navigationssatelliten SAT weltweit ausgestrahlt werden. Die Auswertung der Navigationssignale durch den GPS-Empfänger erlaubt es, die globale Position des mobilen Endgerätes ME zu ermitteln.

Der Speicher MEM enthält einen oder mehrere Einträge, in denen jeweils einer in GPS-Koordinaten abgespeicherten Referenzposition RPOS ein Endgerät, hier ein Tischendgerät TE, zugeordnet ist. Als das jeweilige Endgerät identifizierende Information kann hierbei z.B. seine Rufnummer abgespeichert werden. In Figur 1 ist aus Übersichtlichkeitsgründen nur eine einzige gespeicherte Referenzposition RPOS explizit dargestellt. Diese bezeichnet im vorliegenden Ausführungsbeipiel die Position des Tischendgerätes TE. Im Prinzip ist die Referenzposition RPOS jedoch nicht an eine Position eines Endgerätes gebunden, sondern kann vielmehr von einem Benutzer frei vorgegeben werden. Eine Vorgabe einer Referenzposition RPOS kann z.B. dadurch erfolgen, daß eine aktuelle, vom GPS-Empfänger GPS ermittelte Position des mobilen Endgerätes ME auf Veranlassung des Benutzers als Referenzposition RPOS übernommen und im Speicher MEM gespeichert wird. Alternativ dazu kann eine Referenzposition RPOS auch explizit, z.B. in Form von GPS-Koordinaten durch einen Benutzer am mobilen Endgerät ME eingegeben werden.

Im vorliegenden Ausführungsbeispiel ermittelt der GPS-Empfänger GPS in regelmäßigen Zeitabständen, z.B. in Abständen von 30 Sekunden, die jeweils aktuelle Position POS des mobilen Endgerätes ME und überträgt diese Position POS zur Vergleichseinrichtung VGL. Die Vergleichseinrichtung VGL vergleicht daraufhin die Position POS des mobilen Endgerätes ME mit der gespeicherten Referenzposition RPOS. Der Vergleich wird ausgeführt, indem die Entfernung zwischen der aktuellen Position POS und der Referenzposition RPOS ermittelt wird und mit einer vorgegebenen Grenzeentfernung, wie z.B. 50 m, verglichen wird. Die Grenzentfernung kann vorzugsweise ebenfalls im Speicher MEM, gegebenenfalls zugeordnet zu einer jeweiligen Referenzposition RPOS, abgespeichert sein. Je nachdem ob die ermittelte Entfernung zwischen aktueller Position POS und Referenzposition RPOS die vorgegebene Grenzentfernung über- oder unterschreitet, werden durch die zentrale Steuerung ST unterschiedliche Steuervorgänge veranlaßt. Im vorliegenden Ausführungsbeispiel wird durch die zentrale Steuerung ST bei Überschreiten der vorgegebenen Grenzentfernung eine vorher im Kommunikationsnetz KN eingerichtete Anrufumleitung aktiviert und bei Unterschreiten dieser Grenzentfernung wieder deaktiviert. Die zentrale Steuerung ST erzeugt dazu abhängig vom Ergebnis des Vergleichs zwischen der aktuellen Position POS und der einem Endgerät, hier TE, zugeordneten Referenzposition RPOS eine Steuerinformation SI. Die Steuerinformation SI enthält unter anderem eine das der Referenzposition RPOS zugeordnete Endgerät, hier TE, identifizierende Endgeräteidentifizierungsinformation, z.B. dessen Rufnummer, sowie eine Authentifizierungsinformation AI. Die Authentifizierungsinformation AI dient zur Überprüfung der Berechtigung zur Steuerung der Anrufumleitung im Kommunikationsnetz KN. Im vorliegenden Ausführungsbeispiel umfaßt die Authentifizierungsinformation AI die Rufnummer des mobilen Endgerätes ME. Die Steuerinformation SI wird von der zentralen Steuerung ST zum GSM-Sende/Empfangsmodul GSM und von diesem drahtlos zur Basisstation BS und damit ins Kommunikationsnetz KN übertragen. Vorzugsweise wird eine Steuerinformation SI immer nur dann gebildet und übertragen wenn sich das Ergebnis des Vergleichs mit einer Grenzentfernung gegenüber dem Ergebnis des entsprechenden, unmittelbar vorangegangenen Vergleichs mit dieser Grenzentfernung ändert.

Die erfindungsgemäße, positionsabhängige Steuerung der Anrufumleitung kann vom Benutzer des mobilen Endgerätes bedarfsweise ein oder ausgeschaltet werden.

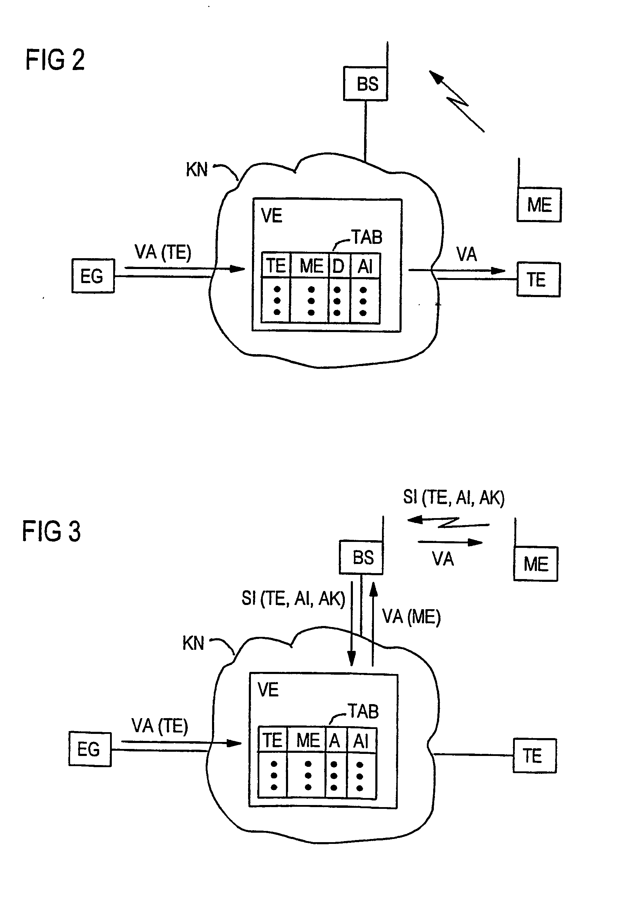

Die Figuren 2 und 3 zeigen jeweils dasselbe Kommunikationssystem bestehend aus dem Kommunikationsnetz KN, der Basisstation BS, dem mobilen Endgerät ME, dem Tischendgerät TE sowie einem weiteren Endgerät EG in schematischer Darstellung. Die Basisstation BS und die Endgeräte EG und TE sind jeweils an das Kommunikationsnetz KN angeschlossen. Das mobile Endgerät ME ist drahtlos an die Basisstation BS gekoppelt. Die Position des Tischendgerätes TE ist im mobilen Endgerät ME als Referenzposition RPOS, dem Tischendgerät TE zugeordnet, abgespeichert.

Die Vermittlungseinrichtung VE enthält eine Anrufumleitungstabelle TAB, in die für die bei der Vermittlungseinrichtung VE registrierten Endgeräte, hier TE, Anrufumleitungen zu beliebigen Endgeräten eingetragen werden können. Im vorliegenden Ausführungsbeispiel ist für das Tischendgerät TE eine Anrufumleitung zum mobilen Endgerät ME eingetragen. Jedem Endgerät, hier TE, für das eine Anrufumleitung eingerichtet ist, wird in der Anrufumleitungstabelle TAB ein jeweiliges Zielendgerät, hier ME, ein Aktivierungsstatus, hier A für aktiviert oder D für deaktiviert, sowie eine Authentifizierungsinformation, hier AI, zugeordnet. Anhand einer jeweiligen Autentifizierungsinformation AI wird durch die Vermittlungseinrichtung VE überprüft, ob ein jeweiliger Sender einer Steuerinformation dazu berechtigt ist, eine Anrufumleitung für ein jeweiliges Endgerät zu steuern. Eine Steuerung einer Anrufumleitung für ein Endgerät wird nur dann erlaubt, wenn die betreffende Steuerinformation die diesem Endgerät in der Anrufsumleitungstabelle TAB zugeordnete Autentifizierungsinformation enthält.

Das Einrichten einer Anrufumleitung, d.h. das Eintragen eines Datensatzes in die Anrufumleitungstabelle TAB, kann vom Tischendgerät TE oder vom mobilen Endgerät ME aus durch Eingabe eines Umleitungsziels, hier ME, erfolgen. Bei Eingabe über das mobile Endgerät ME ist zusätzlich zum Umleitungsziel noch dasjenige Endgerät, hier TE, für das die Anrufumleitung einzurichten ist, z.B. durch Eingabe seiner Rufnummer, zu identifizieren. Weiterhin ist am mobilen Endgerät ME noch die diesem Endgerät, hier TE, zuzuordnende Referenzposition RPOS zu definieren. Vorzugsweise wird dazu das mobile Endgerät ME in die Nähe des Tischendgerätes TE gebracht und die aktuell ermittelte Position POS des mobilen Endgerätes ME durch eine zu diesem Zweck reservierte Benutzereingabe als Referenzposition RPOS im Speicher MEM abgespeichert.

Im vorliegenden Ausführungsbeispiel besteht die Authentifizierungsinformation AI aus der Rufnummer des mobilen Endgerätes ME. Dies bedeutet, daß die für das Tischendgerät TE eingetragene Anrufumleitung durch Steuerinformationen SI des mobilen Endgerätes ME gesteuert werden kann.

Figur 2 zeigt eine Situation, in welcher der Benutzer sich mit seinem mobilen Endgerät ME in unmittelbarer Nähe des Tischendgerätes TE aufhält. Die durch das mobile Endgerät ME ermittelte Entfernung zwischen der aktuellen Position POS und der dem Tischendgerät TE zugeordneten Referenzposition RPOS ist dabei geringer als die vorgegebene Grenzentfernung. In der Vermittlungseinrichtung VE ist durch einen entsprechenden Eintrag in der Anrufumleitungstabelle TAB eine Anrufumleitung für das Tischendgerät TE zum mobilen Endgerät ME eingerichtet, aber zunächst durch einen, dem Tischendgerät TE zugeordneten Aktivierungsstatus D als deaktiviert gekennzeichnet.

Da die für das Tischendgerät TE eingerichtete Anrufumleitung deaktiviert ist, werden bei der Vermittlungseinrichtung VE eintreffende Verbindungsanforderungen VA, die vom Endgerät EG an das Tischendgerät TE gerichtet sind, durch die Vermittlungseinrichtung VE bestimmungsgemäß zum Tischendgerät TE vermittelt. Da sich der Benutzer mit seinem mobilen Endgerät ME in der Nähe des Tischendgerätes TE befindet, können die eintreffenden Verbindungsforderungen VA durch den Benutzer am Tischendgerät TE entgegengenommen werden.

Figur 3 veranschaulicht eine Situation, in der sich der Benutzer mit seinem mobilen Endgerät ME vom Tischendgerät TE entfernt. In dieser Situation wird durch die Vergleichseinrichtung VGL des mobilen Endgerätes ME festgestellt, daß die Entfernung zwischen der aktuell ermittelten Position POS des mobilen Endgerätes ME und der dem Tischendgerät TE zugeordneten Referenzposition RPOS die vorgegebene Grenzentfernung überschreitet. Infolgedessen bildet die zentrale Steuerung ST des mobilen Endgerätes ME eine Steuerinformation SI zur Aktivierung einer Anrufumleitung. Die Anrufumleitung wird für dasjenige Endgerät, hier TE, aktiviert, das der dem Vergleich zugrunde liegenden Referenzposition RPOS im Speicher MEM zugeordnet ist. Die gebildete Steuerinformation SI umfaßt demgemäß eine das Tischendgerät TE identifizierende Endgeräteidentifizierungsinformation, z.B. seine Rufnummer, die Authentifizierungsinformation AI sowie ein Aktivierungskommando AK zum Aktivieren der Anrufumleitung. Die Steuerinformation SI wird vom mobilen Endgerät ME drahtlos zur Basisstation BS und von dieser zur Vermittlungseinrichtung VE übertragen. Daraufhin wird von der Vermittlungseinrichtung VE derjenige Eintrag in der Anrufumleitungstabelle TAB ermittelt, der dem durch die Steuerinformation SI identifizierten Tischendgerät TE zugeordnet ist. Im vorliegenden Ausführungsbeispiel betrifft der ermittelte Eintrag die bisher deaktivierte Anrufumleitung vom Tischendgerät TE zum mobilen Endgerät ME. Anschließend wird die Berechtigung zur Steuerung der Anrufumleitung durch Vergleich der in der empfangenen Steuerinformation SI enthaltenen Authentifizierungsinformation und der in der Anrufumleitungstabelle TAB gespeicherten Authentifizierungsinformation geprüft. Nach einer erfolgreichen Berechtigungsprüfung wird die Anrufumleitung durch die Vermittlungseinrichtung VE aktiviert und durch Eintragen des Aktivierungsstatus A in die Anrufumleitungstabelle TAB als aktiv gekennzeichnet. Nachfolgende, vom Endgerät EG an das Tischendgerät TE gerichtete Verbindungsanforderungen VA werden infolgedessen von der Vermittlungseinrichtung VE zum mobilen Endgerät ME umgeleitet. Die Vermittlungseinrichtung VE leitet dazu die Verbindungsanforderungen VA - mit der Rufnummer des mobilen Endgerätes ME als neuer Zielinformation versehen - an die Basisstation BS weiter. Diese veranlaßt daraufhin anhand der neuen Zielinformation den weiteren drahtlosen Verbindungsaufbau zum mobilen Endgerät ME.

Nähert sich das mobile Endgerät ME wieder dem Tischendgerät TE an, so daß die Entfernung zwischen der aktuell ermittelten Position POS und der Referenzposition RPOS wieder die vorgegebene Grenzentfernung unterschreitet, wird durch die zentrale Steuerung ST eine weitere Steuerinformation (nicht dargestellt) zum Deaktivieren der Anrufumleitung gebildet und zur Vermittlungseinrichtung VE übertragen. Die Anrufumleitung wird daraufhin durch die Vermittlungseinrichtung VE deaktiviert und durch Eintragen des Aktivierungsstatus D in die Anrufsumleitungstabelle TAB als deaktiviert gekennzeichnet. Nachfolgende, von einem Endgerät EG an das Tischendgerät TE gerichtete Verbindungsanforderungen werden infolgedessen von der Vermittlungseinrichtung VE wieder bestimmungsgemäß zum Tischendgerät TE weitergeleitet.

Die Anrufumleitung kann vorzugsweise auch dann deaktiviert werden, wenn das mobile Endgerät ME ausgeschaltet wird. In diesem Fall ist im Rahmen des Ausschaltevorgangs eine Steuerinformation zum Deaktivieren der Anrufumleitung vom mobilen Endgerät ME zur Vermittlungseinrichtung VE zu übertragen.

Gemäß einer alternativen Ausführungsform der Erfindung kann der Vergleich der aktuellen Position POS des mobilen Endgerätes ME mit einer Referenzposition RPOS sowie die davon abhängige Steuerung der Anrufumleitung auch durch eine entsprechend ausgestaltete Basisstation oder Vermittlungseinrichtung erfolgen. In diesen Fällen ist jeweils die aktuell ermittelte Position POS des mobilen Endgerätes ME zu dieser Basisstation bzw. zu dieser Vermittlungseinrichtung zu übertragen. Dementsprechend sind die Referenzpositionen RPOS sowie deren Zuordnung zu einem jeweiligen Endgerät in dieser Basisstation bzw. in dieser Vermittlungseinrichtung abzuspeichern.

Weiterhin kann vor der Durchführung eines Positionsvergleichs jeweils der Aktivierungsstatus der Anrufumleitung abgefragt werden. Der Positionsvergleich kann dann abhängig vom festgestellten Aktivierungsstatus erfolgen. So kann bei deaktivierter Anrufumleitung geprüft werden, ob sich das mobile Endgerät ME von der Referenzposition RPOS entfernt, und bei aktivierter Anrufumleitung geprüft werden, ob sich das mobile Endgerät ME der Referenzposition RPOS nähert. Eine Steuerinformation SI wird dann jeweils nur bei positivem Prüfungsergebnis gebildet.

Eine erfindungsgemäße Steuerung einer Anrufumleitung muß sich nicht auf deren Aktivierung oder Deaktivierung beschränken; sondern kann auch z.B. ein Einrichten oder Konfigurieren der Anrufumleitung betreffen. So kann z.B., falls durch das mobile Endgerät ME festgestellt wird, daß sich dieses einer vorgegebenen Referenzposition eines weiteren Endgerätes, z.B. dem Heimendgerät des Benutzers nähert, ein Einrichten einer neuen Anrufumleitung zu diesem weiteren Endgerät durch das mobile Endgerät ME veranlaßt werden. Das neue Umleitungsziel ist dabei vorzugsweise in einer zum Einrichten der neuen Anrufumleitung durch die zentrale Steuerung ST gebildeten Steuerinformation anzugeben und zur Vermittlungseinrichtung VE zu übertragen.

## Patentansprüche

1. Verfahren zum Steuern einer Anrufumleitung von an ein erstes Endgerät (TE) eines Kommunikationssystems gerichteten Verbindungsanforderungen (VA), wobei
a) mittels eines Satellitennavigationsempfängers (GPS) eines an das Kommunikationssystem drahtlos ankoppelbaren, vom ersten Endgerät (TE) verschiedenen mobilen Endgerätes (ME) dessen Position (POS) ermittelt wird,
b) die ermittelte Position (POS) mit einer gespeicherten, dem ersten Endgerät (TE) zugeordneten Referenzposition (RPOS) verglichen wird, und
c) die Anrufumleitung abhängig vom Vergleichsergebnis gesteuert wird.

2. Verfahren nach Anspruch 1,
**dadurch gekennzeichnet,**
**daß** der Vergleich der ermittelten Position (POS) mit der gespeicherten Referenzposition (RPOS) sowie die Steuerung der Anrufumleitung vom mobilen Endgerät (ME) ausgeführt werden.

3. Verfahren nach Anspruch 1,
**dadurch gekennzeichnet,**
**daß** die ermittelte Position (POS) durch das mobile Endgerät (ME) zu einer an das Kommunikationssystem angekoppelten Basisstation (BS) übermittelt wird, und
der Vergleich der ermittelten Position (POS) mit der gespeicherten Referenzposition (RPOS) sowie die Steuerung der Anrufumleitung von der Basisstation (BS) ausgeführt werden.

4. Verfahren nach Anspruch 3,
**dadurch gekennzeichnet,**
**daß** in regelmäßigen Zeitabständen eine jeweils aktuell ermittelte Position (POS) durch das mobile Endgerät (ME) zur Basisstation (BS) übermittelt wird.

5. Verfahren nach einem der vorhergehenden Ansprüche,
**dadurch gekennzeichnet,**
**daß** zum Steuern der Anrufumleitung eine Steuerinformation (SI) zu einer Leistungsmerkmalsteuerung des Kommunikationssystems übermittelt wird.

6. Verfahren nach einem der vorhergehenden Ansprüche,
**dadurch gekennzeichnet,**
**daß** zum Vergleich der ermittelten Position (POS) mit der Referenzposition (RPOS) die Entfernung zwischen der ermittelten Position (POS) und der Referenzposition (RPOS) ermittelt wird.

7. Verfahren nach Anspruch 6,
**dadurch gekennzeichnet,**
**daß** die Steuerung der Anrufumleitung **dadurch** veranlaßt wird, daß die ermittelte Entfernung einen vorgegebenen Werterahmen überschreitet.

8. Verfahren nach Anspruch 7,
**dadurch gekennzeichnet,**
**daß** unterschiedliche Werterahmen vorgegeben sind, bei deren jeweiligem Überschreiten eine werterahmenspezifische Steuerung der Anrufumleitung veranlaßt wird.

9. Mobiles Endgerät (ME) zum drahtlosen Ankoppeln an ein Kommunikationssystem, mit
a) einem Satellitennavigationsempfänger (GPS) zum Ermitteln einer Position (POS) des mobilen Endgerätes (ME),
b) einem Positionsspeicher (MEM) zum Speichern einer vorgebbaren Referenzposition (RPOS),
c) einer Vergleichseinrichtung (VGL) zum Vergleichen der ermittelten Position (POS) des mobilen Endgerätes (ME) mit der gespeicherten Referenzposition (RPOS) und
d) einer Steuereinrichtung (ST) zum Steuern einer Anrufumleitung von an ein vom mobilen Endgerät (ME) verschiedenes Endgerät (TS) des Kommunikationssystems gerichteten Verbindungsanforderungen (VA) abhängig vom Vergleichsergebnis.

10. Basisstation (BS) zum Ankoppeln an ein Kommunikationssystem und zum drahtlosen Ankoppeln von mobilen Endgeräten, mit
a) einer Empfangseinrichtung zum Empfang einer Positionsinformation von einem mobilen Endgerät (ME),
b) einem Positionsspeicher zum Speichern einer vorgebbaren Referenzposition,
c) einer Vergleichseinrichtung zum Vergleichen der empfangenen Positionsinformation mit der gespeicherten Referenzposition und
d) einer Steuereinrichtung zum Steuern einer Anrufumleitung von an ein von dem mobilen Endgerät (ME) verschiedenes Endgerät (TS) des Kommunikationssystems gerichteten Verbindungsanforderungen (VA) abhängig vom Vergleichsergebnis.

## Claims

1. Method for controlling a call diversion of connection requests (VA) aimed at a first terminal (TE) of a communication system, in which
a) the position (POS) of a mobile terminal (ME) other than the first terminal (TE), which can be wirelessly coupled to the communication system, is determined by means of its satellite navigation receiver (GPS),
b) the position (POS) found is compared with a stored reference position (RPOS) allocated to the first terminal (TE), and
c) the call diversion is controlled in dependence on the result of the comparison.

2. Method according to Claim 1, **characterized in that** the comparison of the position (POS) found with the stored reference position (RPOS) and the controlling of the call diversion are carried out by the mobile terminal (ME).

3. Method according to Claim 1, **characterized in that** the position (POS) found is transmitted by the mobile terminal (ME) to a base station (BS) coupled to the communication system, and
the comparison of the position (POS) found with the stored reference position (RPOS) and the controlling of the call diversion are carried out by the base station (BS).

4. Method according to Claim 3, **characterized in that** an in each case currently found position (POS) is transmitted by the mobile terminal (ME) to the base station (BS) at regular time intervals.

5. Method according to one of the preceding claims, **characterized in that** for controlling the call diversion, a control information item (SI) is transmitted to a feature controller of the communication system.

6. Method according to one of the preceding claims, **characterized in that**, for comparing the position (POS) found with the reference position (RPOS), the distance between the position (POS) found and the reference position (RPOS) is found.

7. Method according to Claim 6, **characterized in that** the controlling of the call diversion is initiated by the distance found exceeding a predetermined frame of values.

8. Method according to Claim 7, **characterized in that** different frames of values are predetermined and a frame-of-value-specific control of the call diversion is initiated when these are exceeded in each case.

9. Mobile terminal (ME) for being wirelessly coupled to a communication system, comprising
a) a satellite navigation receiver (GPS) for determining a position (POS) of the mobile terminal (ME),
b) a position memory (MEM) for storing a predetermined reference position (RPOS),
c) a comparison device (VGL) for comparing the found position (POS) of the mobile terminal (ME) with the stored reference position (RPOS), and
d) a processor (ST) for controlling a call diversion of connection requests (VA) aimed at a terminal (TS), other than the mobile terminal (ME), of the communication system in dependence on the result of the comparison.

10. Base station (BS) for being coupled to a communication system and for being wirelessly coupled to mobile terminals, comprising
a) a receiving device for receiving a position information item from a mobile terminal (ME),
b) a position memory for storing a predeterminable reference position,
c) a comparison device for comparing the received position information with the stored reference position, and
d) a processor for controlling a call diversion of connection requests (VA) aimed at a terminal (TS), other than the mobile terminal (ME), of the communication system in dependence on the result of the comparison.

## Revendications

1. Procédé pour commander un transfert d'appels de demandes de connexion (VA) adressées à un premier terminal (TE) d'un système de communication,
a) la position d'un terminal mobile (ME) étant déterminée au moyen d'un récepteur de navigation par satellite (GPS) de ce terminal mobile (ME) pouvant être couplé sans fil au système de communication et différent du premier terminal (TE),
b) la position déterminée (POS) étant comparée avec une position de référence (RPOS) mémorisée et attribuée au premier terminal (TE), et
c) le transfert d'appels étant commandé en fonction du résultat de la comparaison.

2. Procédé selon la revendication 1,
**caractérisé en ce que**
la comparaison de la position déterminée (POS) avec la position de référence (RPOS) mémorisée et la commande du transfert d'appels sont effectuées par le terminal mobile (ME).

3. Procédé selon la revendication 1,
**caractérisé en ce que**
la position déterminée (POS) est transmise par le terminal mobile (ME) à une station de base (BS) couplée au système de communication et la comparaison de la position déterminée (POS) avec la position de référence (RPOS) mémorisée et la commande du transfert d'appels sont réalisées par la station de base (BS).

4. Procédé selon la revendication 3,
**caractérisé en ce que**,
à des intervalles réguliers, une position déterminée (POS) actuellement est transmise par le terminal mobile (ME) à la station de base (BS).

5. Procédé selon l'une quelconque des revendications précédentes,
**caractérisé en ce que**,
pour la commande du transfert d'appels, une information de commande (SI) est transmise à une commande de caractéristique de service du réseau de communication.

6. Procédé selon l'une quelconque des revendications précédentes,
**caractérisé en ce que**,
pour la comparaison de la position déterminée (POS) avec la position de référence (RPOS), on détermine la distance entre la position déterminée (POS) et la position de référence (RPOS).

7. Procédé selon la revendication 6,
**caractérisé en ce que**
la commande du transfert d'appels est demandée du fait que la distance déterminée dépasse un cadre de valeurs prédéfini.

8. Procédé selon la revendication 7,
**caractérisé en ce que**
on prédéfinit différents cadres de valeurs, lors du dépassement respectif desquels on demande une commande spécifique au cadre de valeurs, du transfert d'appels.

9. Terminal mobile (ME) pour le couplage sans fil à un système de communication, comprenant
a) un récepteur de navigation par satellite (GPS) pour déterminer une position (POS) du terminal mobile (ME),
b) une mémoire de position (MEM) pour la mémorisation d'une position de référence (RPOS) prédéfinissable,
c) un dispositif de comparaison (VGL) pour la comparaison de la position déterminée (POS) du terminal mobile (ME) avec la position de référence (RPOS) mémorisée et
d) un dispositif de commande (ST) pour la commande d'un transfert d'appels de demandes de connexion (VA) adressées à un terminal (TS), différent du terminal mobile (ME), du système de communication en fonction du résultat de la comparaison.

10. Station de base (BS) pour le couplage à un système de communication et pour le couplage sans fil de terminaux mobiles, comprenant
a) un dispositif de réception pour la réception d'une information de position d'un terminal mobile (ME),
b) une mémoire de position pour la mémorisation d'une position de référence prédéfinissable,
c) un dispositif de comparaison pour la comparaison de l'information de position reçue avec la fréquence de position mémorisée et
un dispositif de commande pour la commande d'un transfert d'appels de demandes de connexion (VA) adressées à un terminal (TS), différent du terminal mobile (ME), du système de communication en fonction du résultat de la comparaison.
